# EUROPEAN PATENT SPECIFICATION

(11) **EP 1 916 655 B1**
(45) Date of publication and mention of the grant of the patent: **02.05.2012**
(21) Application number: 07123687.1
(22) Date of filing: 11.06.2004
(51) Int. Cl.: G11B 7/007, G11B 7/24

(54) **Information storage medium and method and apparatus for recording and/or reproducing data**
Informationsspeichermedium sowie Verfahren und Vorrichtung zur Aufzeichnung und/oder Wiedergabe von Daten
Support de stockage d'informations et procédé et appareil pour l'enregistrement et/ou la reproduction de données

(30) Priority: 12.06.2003 US 477793 P; 30.06.2003 US 483233 P; 08.09.2003 KR 20030062855
(43) Date of publication of application: 30.04.2008
(62) Divisional of application: 04773913.1
(73) Proprietor: Samsung Electronics Co., Ltd., Suwon-si, Gyeonggi-do 442-742 (KR)
(72) Inventor: Lee, Kyung-Geun, 463-773, Gyeonggi-do (KR); Ko, Jung-Wan, 443-737, Gyeonggi-do (KR)
(74) Representative: Robinson, Ian Michael

(56) References cited:
- EP-A- 1 244 096
- JP-A- 2000 311 346
- US-A1- 2002 080 705
- US-A1- 2002 098 806
- US-A1- 2003 137 915

## Description

### Technical Field

The present invention relates to recordable information storage media, and more particularly, to an information storage medium designed to control optimum writing power in optimal power control (OPC) areas even when eccentricity occurs among a plurality of information storage layers and a method and apparatus for recording/re-producing data on/from the information storage media.

### Background Art

General information storage media are widely used as information recording media of optical pickup apparatuses for recording/reproducing data in a non-contact way. Optical disks are used as the information storage medium and are classified as compact disks (CDs) or digital versatile disks (DVDs) according to their information storage capacity. Examples of recordable, erasable, and reproducible optical disks are 650MB CD-R, CD-RW, 4.7GB DVD+RW, and the like. Furthermore, HD-DVDs having a recording capacity of 25GB or greater are under development.

As described above, information storage media have been developed to have a greater recording capacity. The recording capacity of an information storage medium can be increased in two representative ways by: 1) reducing the wavelength of a recording beam emitted from a light source; and 2) increasing the numerical aperture of an objective lens. In addition, there is another method of forming a plurality of information storage layers.

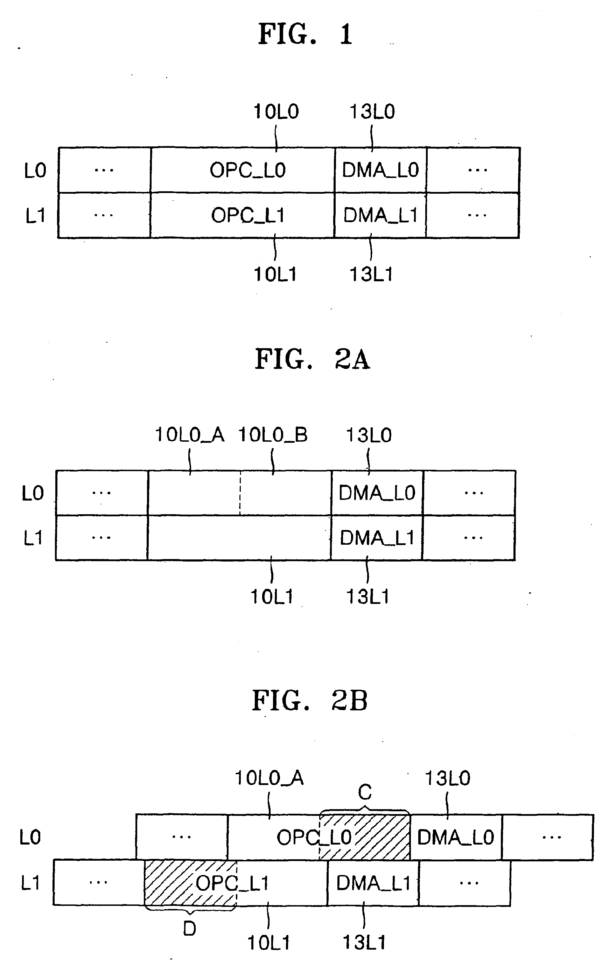

FIG. 1 schematically shows a dual-layered information storage medium having first and second information storage layers L0 and L1. The first and second information storage layers L0 and L1 include first second optimal power control (OPC) areas 10L0 and 10L1, respectively, for obtaining an optimal writing power and first and second defect management area (DMAs) 13L0 and 13L1, respectively. The first and second OPC areas 10L0 and 10L1 are disposed to face each other.

Data is recorded in the first and second OPC areas 10L0 and 10L1 using various levels of writing power to find the optimum writing power. Hence, data may be recorded at a power level higher than the optimum writing power. Table 1 shows variations in the jitter characteristics of each of the first and second information storage layers L0 and L1 when data is recorded in the OPC areas with different levels of writing power.

**Table 1**

| | | Normal writing power | Normal writing power | Normal writing power | Normal writing power | Writing power about 20% higher than normal writing power | Writing power about 20% higher than normal writing power |
|---|---|---|---|---|---|---|---|
| L0 | | Writing | Unwritten | Writing | Written | Writing | Written |
| L1 | | Unwritten | Writing | Written | Writing | Written | Writing |
| jitter | L0 | 5.9% | | 6.0% | 5.8% | | 5.9%->6. 4% |
| | L1 | | 63% | 6.2% | 63% | 6.2% -> 63% | |
| Writing Powder | L0 | 6.4 | | 63 | 63 | 7.5 | 6.4 |
| | L1 | | 6.0 | 6.0 | 6.2 | 6.0 | 7.2 |

According to Table 1, if data is recorded with normal writing power, the jitter characteristics of the first or second information storage layer L0 or L1 remain constant. On the other hand; if data is recorded with writing power about 20% higher than the normal writing power, the jitter characteristics of the OPC area of a first or second information storage layer L0 or L1 in which data has already been recorded are degraded. If data is recorded on one of the first and second information storage layers L0 and L1 with writing power more than 20% higher than the normal writing power, it can be expected that the jitter characteristics of the other information storage layer may be further degraded.

Hence, if the first and second OPC areas 10L0 and 10L1 of the first and second information storage layers L0 and L1 exist within an equal radius as shown in FIG. 1, one of them may not be usable.

JP 2000311346 discloses an information storage medium and apparatus according to the pre-characterising portions of claims 1, 2 and 3 appended hereto.

### Disclosure of the Invention

### Technical Problem

The recording status of one of the first and second OPC areas 10L0 and 10L1 may affect the recording characteristics of the other OPC area. For example, as shown in FIG.2A, if data has been recorded on a part of 10L0_A of the first OPC area 10L0 and no data has been recorded on the residual area 10L0_B thereof, the recording property of a part of the second OPC area 10L1 which corresponds to the occupied part 10L0_A of the first OPC area 10L0 is different from that of a part of the second OPC area 10L1 which corresponds to the unoccupied part 10L0_B of the first OPC area 10L0. In other words, since the transmittance of the laser with respect to the occupied part 10L0_A of the first OPC area 10L0 is different from the transmittance of a laser with respect to the unoccupied part 10L0_B thereof, the recording property of the second OPC area 10L1 may be irregular over the area.

As described above, if the first and second OPC areas are disposed within an equal radius, they may not properly function.

During the manufacture of an information storage medium, eccentricity may occur. For example, an information storage medium having a single information storage layer may have eccentricity of about 70-80µm(p-p) (where p denotes a peak). To manufacture an information storage medium having first and second information storage layers L0 and L1, the first and second storage layers L0 and L1 are separately manufactured and then attached to each other. When eccentricity occurs during the manufacture of each of the first and second information storage layers L0 and L1, they may be attached to each other such that areas of the first information storage layer L0 are not aligned with those of the second information storage layer L1 as shown in FIG. 2B.
When the first and second OPC areas 10L0 and 10L1 are not in line, overlapped areas generated due to the out-of-line arrangement may affect each other. For example, if data is recorded on the first OPC area OPC_L0 using higher power than the normal writing power, the first OPC area OPC_L0 adversely affects a defect management area (DMA_L1) of the second information storage layer L1 because the DMA_L1 contacts a part C of the first OPC area 10L0. Also, a part D of the second OPC area OPC_L1 may adversely affect a part of the first information storage layer that contacts the part D, and thus the part may not be used.

### Technical Solution

An aspect of the present invention provides an information storage medium including an area in which optimum power control (OPC) is performed, thereby preventing an area other than the OPC area from being affected by possible eccentricity. The present invention is, therefore, defined by the features of the appended claims

### Advantageous Effects

Even when an information storage medium according to the present invention is made eccentric or has a manufacturing error, a recording property of the information storage medium is prevented from being degraded due to an influence of an OPC area in an information storage layer upon an OPC area in an adjacent information storage layer.

### Description of Drawings

FIG. 1 illustrates a layout of a data area of a conventional dual-layered information storage medium;
FIGS. 2A and 2B are views illustrating the influence of an OPC area upon an area other than the OPC area in the conventional dual-layered information storage medium of FIG. 1;
FIG 3A illustrates a layout of a data area of a dual-layered information storage medium according to an embodiment of the present invention;
FIG. 3B illustrates a layout of a data area of a single-layered information storage medium according to an embodiment of the present invention;
FIGS. 4A and 4B illustrate different eccentric states of the dual-layered information storage medium of FIG. 3A;
FIG. 5A illustrates a layout of a data area of a four-layered information storage medium according to an embodiment of the present invention;
FIG. 5B illustrates an eccentric state of the four-layered information storage medium of FIG. 5A;
FIG. 6A illustrates a variation of the dual-layered information storage medium of FIG. 3A;
FIGS. 6B and 6C illustrate different eccentric states of the dual-layered information storage medium of FIG. 6A;
FIG. 7A illustrates another variation of the dual-layered information storage medium of FIG. 3A;
FIG. 7B illustrates a variation of the single-layered information storage medium of FIG. 3B;
FIG. 8 illustrates a layout of a data area of a dual-layered information storage medium according to another embodiment of the present invention; and
FIG. 9 illustrates a variation of the dual-layered information storage medium of FIG. 8.
FIG. 10 is a block diagram of an apparatus for recording/reproducing information to/from an information storage medium according to an embodiment of the present invention; and
FIG. 11 is a block diagram of a disk drive in which the apparatus of FIG. 10 is implemented.

### Mode for Invention

Reference will now be made in detail to the embodiments of the present invention, examples of which are illustrated in the accompanying drawings, wherein like reference numerals refer to the like elements throughout. The embodiments are described below to explain the present invention by referring to the figures.

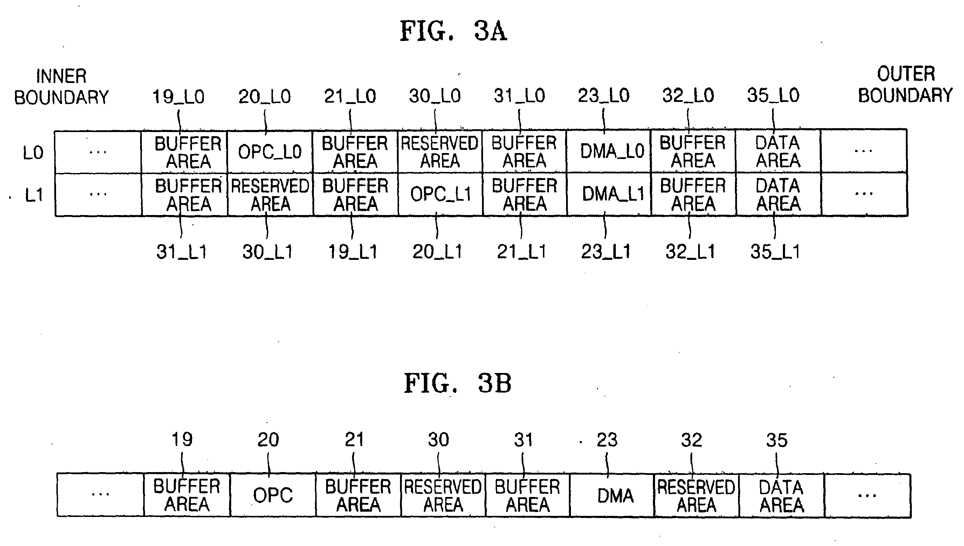

Referring to FIGS. 3A and 3B, an information storage medium according to an embodiment of the present invention includes at least one information storage layer, each of which includes an optimal power control (OPC) area for obtaining optimal power. The OPC areas are disposed within different radii such that the OPC areas do not to face each other.

Each of the information storage layers further includes a defect management area (DMA) and a data area in which user data is recorded.

FIG. 3A illustrates a dual-layered information storage medium which includes first and second information storage layers L0 and L I . The first information storage layer L0 includes a first OPC area 20_L0, a first DMA 23_L0, and a first data area 35_L0, and the second information storage layer L includes a second OPC area 20_L1, a second DMA 23_L1, and a second data area 35_L1.

The first and second OPC areas 20_L0 and 20_L1 are located within different radiuses of the information storage medium. First buffer areas 19_L0 and 21_L0 are disposed in front of and behind the first OPC area 20_L0, respectively. Second buffer areas 19_L1 and 21_L1 are disposed in front of and behind the second OPC area 20_L1, respectively.

Preferably, but not always required, the first and second buffer areas 19_L0, 21_L0, 19_L1, and 21_L1 have lengths sufficient to cover a tolerance necessary for manufacturing an information storage medium. The tolerance is obtained in consideration of at least one of three factors: an error in the determination of the start position of each area: the size of a beam for recording and reproduction; and eccentricity. The error in the determination of the start position of each area is generated during mastering of the information storage medium and has a size of about 100 µ m. In an information storage medium having no buffer areas between areas, when data is recorded on or reproduced from a track, an adjacent track is affected by a beam spot because the radius of the beam spot is typically greater than a track pitch. Thus, a buffer area is placed between areas. The size of the buffer area may be determined in consideration of the size of a recording and reproducing beam so as to prevent an influence of the recording and reproducing beam.

If the information storage medium used is manufactured with an error, the first and second buffer areas 19_L0, 21_L0, 19_L1, and 21_L1 prevent the first and second OPC areas 20_L0 and 20_L from affecting other areas.

The first and second OPC areas 20_L0 and 20_L1 are disposed within different radii so that the first and second OPC areas 20_LO and 20_L1 do not to face each other. In other words, the first OPC area 20_L0 faces a reserved area 30_L1, and the second OPC area 20_L1 faces a reserved area 30_L0.

The first and second OPC areas 20_L0 and 20_L1 are manufactured to be spaced apart from each other by a distance corresponding to no less than an allowable eccentricity amount in the radial direction of the information storage medium, In other words, a difference between locations of the first and second OPC areas 20_L0 and 20_L1 in the radial direction is no less than the allowable eccentricity amount. The difference between the locations of the first and second OPC areas 20_L0 and 20_L1 denotes a distance between a rear end of the first OPC area 20_L0 and a front end of the second OPC area 20_L1.

Referring to FIG. 3A, the first and second buffer areas 19_L1 and 21_L0 preferably are separated by a distance corresponding to no less than an allowable eccentricity amount.

The dual-layered information storage medium of FIG. 3A further includes at least one pair of a pair of buffer areas 31_L0 and 31_L1 and a pair of buffer areas 32_L0 and 32_L1 and reserved areas 30_L0 and 30_L1. The reserved areas 30_L0 and 30_L1 may not be included. The buffer areas are disposed between the reserved area 30_L0 (or 30_L1) and the OPC area 20_L0 (or 20_L1) and between the DAM 23_L0 (or 23_L1) and the data area 35_L0 (or 35_L1).

In the dual-layered information storage medium of FIG. 3A, buffers are disposed on both sides of each of the first and second OPC areas 20_L0 and 20_L1 of the corresponding first and second information storage layers L0 and L1. Preferably, this principle is equally applied to a single-layered information storage information of FIG. 3B.

Referring to FIG. 3B, the single-layered information storage medium includes an OPC area 20 and buffer areas 19 and 2 disposed on both sides of the OPC area 20. The single-layered information storage medium further includes a reserved area 30, a DMA 23, and a data area 35. As illustrated in FIG. 3B, a buffer area 31 is interposed between the reserved area 30 and the DMA 23, and a buffer area 32 is interposed between the DMA 23 and the data area 35.

To prevent an influence of eccentricity upon the information storage medium shown in FIG. 3A, each of the first and second buffer areas 19_L0, 21_L0, 19_L1, and 21_L1 has a size corresponding to the allowable eccentricity amount. Accordingly, even when the first and second information storage layers L0 and L are made eccentric by the maximum amount in the range of the allowable eccentricity amount, the OPC areas 20_L0 and 20_L1 of the first and second information storage layers, respectively, are arranged such that the OPC areas 20_L0 and 20_L1 do not face each other.

In an information storage medium with a 120mm diameter, the allowable eccentricity amount is in the range of about 70-80 µ m. In an information storage medium with a 60mm diameter, the allowable eccentricity amount is in the range of about 20-30 µ m. The allowable eccentricity amount varies depending on the size of an information storage medium. Hence, the first and second buffer areas 19_L0, 21_L0, 19_L1, and 21_L1 have sizes in the range of 5 to 100 µ m so as to cover the allowable eccentricity amounts of all possible kinds of information storage media.

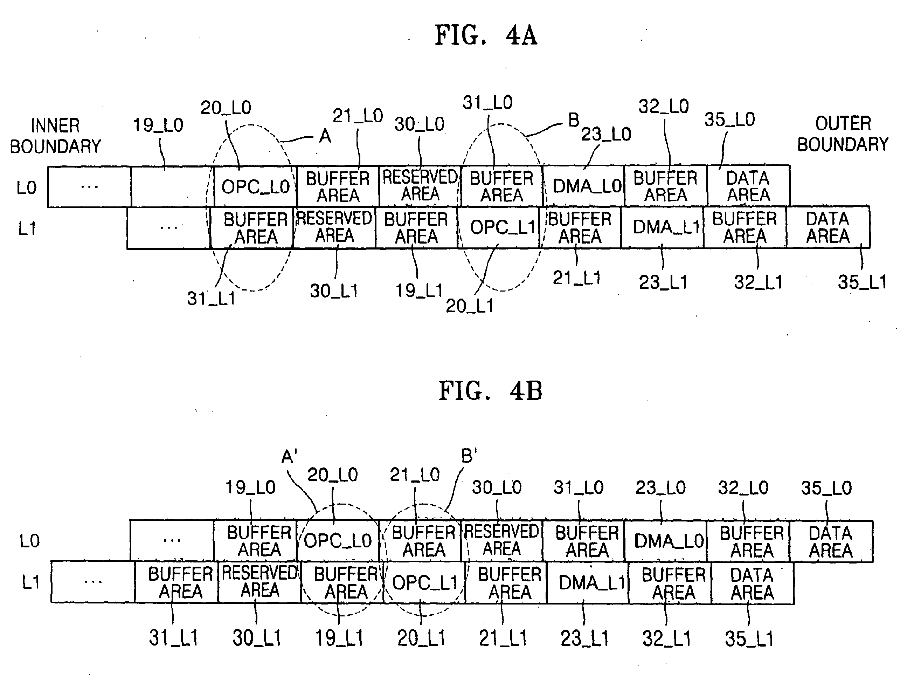

FIGS. 4A and 4B illustrate the first and second information storage layers L0 and L1, which are made eccentric by the maximum amount within the range of the allowable eccentricity amount. FIG. 4A illustrates the first and second information storage layers L0 and L1 made eccentric toward the inner and outer boundaries, respectively, of the information storage medium of FIG. 3A. FIG. 4B illustrates the first and second information storage layers L0 and L1 made eccentric toward the outer and inner boundaries, respectively, of the information storage medium of FIG. 3A.

Referring to FIG. 4A, when the information storage medium of FIG. 3A is in a maximal eccentric state, the first OPC area 20_L0 faces the buffer area 31_L1 (see circle A) or the reserved area 30_L1 instead of the second OPC area 20_L1. Similarly, the second OPC area 20_L1 faces the buffer area 31_L0 (see circle B) or the reserved area 30_L0 instead of the first OPC area 20_L0.

Referring to FIG. 4B, when the information storage medium of FIG. 3A is in a maximal eccentric state, the first OPC area 20_L0 faces the buffer area 19_L1 (see circle A ? ), and the second OPC area 20_L1 faces the buffer area 21_L0 (see circle B ?).

As described above, even when the information storage medium of FIG. 3A is in a maximal eccentric state, the first and second OPC areas 20_L0 and 20_L1 do not face each other and accordingly do not affect each other during a test for optimal power control. Of course, when the information storage medium as shown in FIG. 3A is not made eccentric, the first and second OPC areas 20_L0 and 20_L1 do not affect each other because they are originally disposed not to face each other.

The above-described layout of the dual-layered information storage medium of FIG. 3A can be equally applied to an information storage medium having more than two information storage layers. In other words, in an information storage medium having at least four information storage layers, odd-numbered information storage layers each have the layout of the first information storage layer L0 of FIG. 3A, and even-numbered information storage layers each have the layout of the second information storage layer L1 of FIG. 3A.

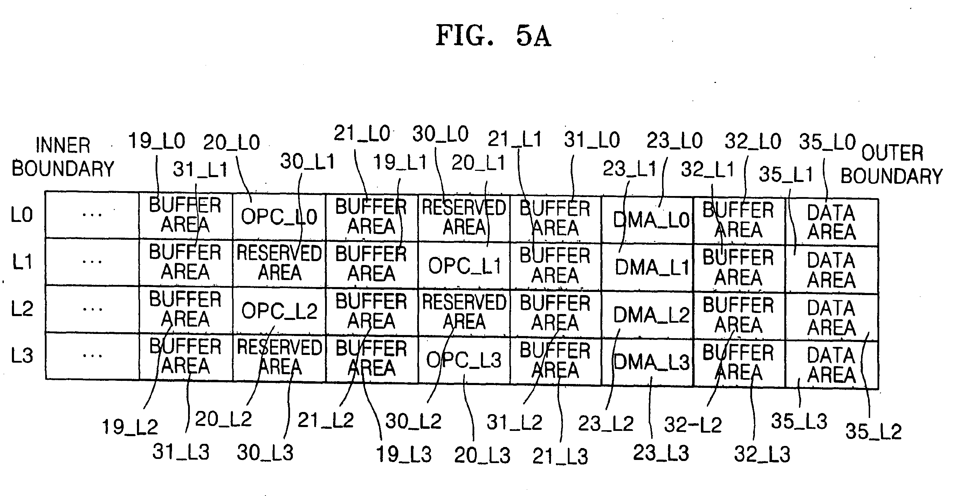

FIG. 5A illustrates a four-layered information storage medium having first, second, third, and fourth information storage layers L0, L1, L2, and L3, respectively. The first, second, third, and fourth information storage layers L0, L1, L2, and L3 include OPC areas 20_L0, 20_L1, 20_L2, and 20_L3, respectively, DMAs 23_L0, 23_L1, 23_L2, and 23_L3, respectively, and data areas 35_L0, 35_L1, 35_L2, and 35_L3, respectively.

If an information storage medium has a plurality of information storage layers, it has an odd-numbered information storage layer(s) and an even-numbered information storage layer(s). OPC areas 20_L1 and 20_L3 included in the odd-numbered information storage layer are referred to as first OPC areas, and OPC areas 20_L0 and 20_L2 included in the even-numbered information storage layer are referred to as second OPC areas. The first and second OPC areas in the odd-numbered and even-numbered information storage layers, respectively, are disposed within different radiuses of the information storage medium. A pair of buffer areas 19_L0 and 21_L0, a pair of buffer areas 19_L1 and 21_L1, a pair of buffer areas 19_L2 and 21_L2, and a pair of buffer areas 19_L3 and 21_L3 for preventing an influence of the OPC due to eccentricity are disposed on both sides of each of the OPC areas 20-L0, 20_L1, 20_L2, and 20_L3, respectively.

Reserved areas 30_L0, 30_L1, 30_L2, and 30_L3 are further included, and buffer areas 31_L0, 31_L1, 31_L2, and 31_L3 may be further disposed adjacent to the reserved areas 30_L0, 30_L1, 30_L2, and 30_L3.

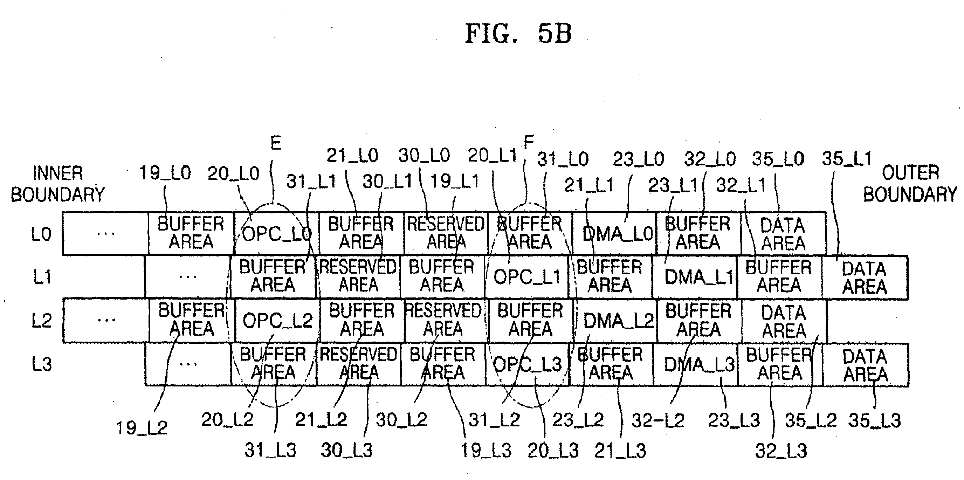

FIG. 5B illustrates an eccentric state of the four-layered information storage medium of FIG. 5A. Even when an information storage medium having at least three information storage layers is made eccentric, OPC areas in adjacent information storage layers do not face each other as illustrated in circles E and F of FIG. 5B. Hence, an influence of the OPC executed in an OPC area upon another OPC area can be prevented.

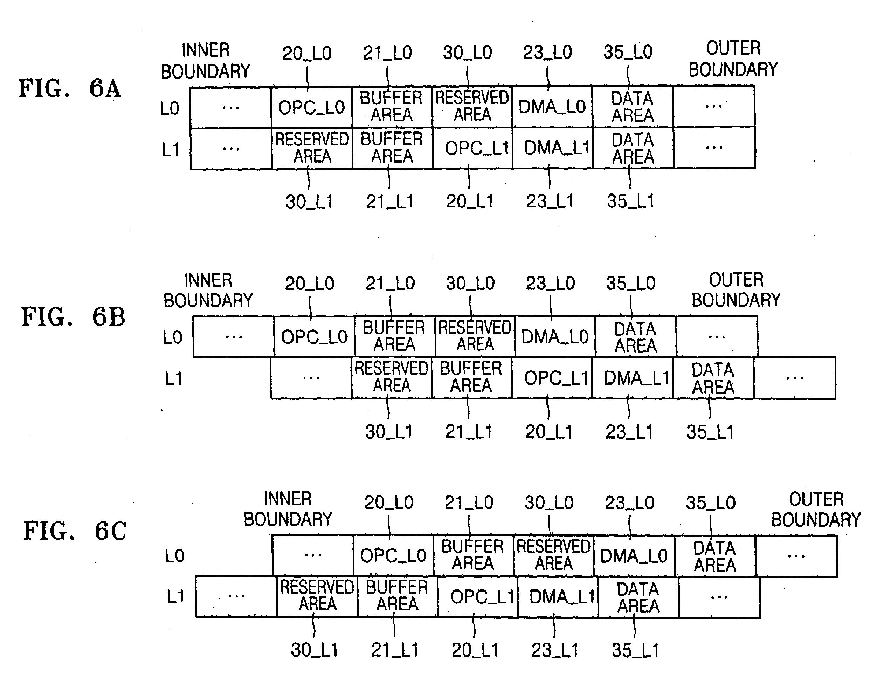

Referring to FIG. 6A, a variation of the dual-layered information storage medium of FIG. 3A includes at least one information storage layer which includes an OPC area for obtaining optimal power, a DMA, and a data area in which user data is recorded. A buffer area is disposed adjacent to the OPC area toward an inner or outer boundary of the information storage medium.

The dual-layered information storage medium of FIG. 6A includes first second information storage layers L0 and L1. The first and second OPC areas 20_L0 and 20_L1 of the first and second information storage layers L0 and L1 are disposed within different radiuses of the information storage medium such that the first and second OPC areas 20_L0 and 20_L1 do not to face each other. The first and second OPC areas 20_L0 and 20_L1 are disposed to be spaced apart from each other in the radial direction of the information storage medium by a distance corresponding to at least a maximum eccentricity amount.

The first buffer area 21_L0 is disposed on a side of the first OPC area 20_L0 that faces the outer boundary of the information storage medium, and the second buffer area 19 _L1 is disposed on a side of the second OPC area 20_L1 that faces the inner boundary of the information storage medium. When the information storage medium has no eccentricity, the first and second buffer areas 21_L0 and 19 _L1 face each other. The first and second buffer areas 21_L0 and 19 _L1 have a length corresponding to at least the maximum eccentricity amount. The reserved areas 30_L0 and 30_L1 are disposed adjacent to the first and second buffer areas 21_L0 and 19 _L1.

In the information storage medium of FIG. 6A, no buffer areas are included between the DMA 23_L0 and the data area 35_L0 and between the DMA 23_L1 and the data area 35_L1 Thus, the information storage medium of FIG. 6A provides more area for storing user data than the information storage medium of FIG. 3A.

FIGS. 6B and 6C illustrate different maximum eccentric states of the dual-layered information storage medium of FIG. 6A. When the first and second information storage layers L0 and L1 are made eccentric toward the inner and outer boundaries, respectively, of the information storage medium of FIG. 6A as shown in FIG. 6B, the second OPC area 20_L1 faces the DMA 23_L0 in the first information storage layer L0.

When the first and second information storage layers L0 and L1 are made eccentric toward the outer and inner boundaries, respectively, of the information storage medium of FIG. 6A as shown in FIG. 6C, the first OPC area 20_L0 faces the buffer area 19 _L1 of the second information storage layer L1, and the second OPC area 20_L1 faces the buffer area 21_L0 in the first information storage layer L0. In other words, in this case, the first and second OPC areas 20_L0 and 20_L1 never face each other even when the information storage medium of FIG. 6A is made eccentric. Thus, the first and second OPC areas 20_L0 and 20_L1 do not affect each other. Also, a recording capacity of the information storage medium of FIG. 6A can be increased by reducing the buffer area as much as possible.

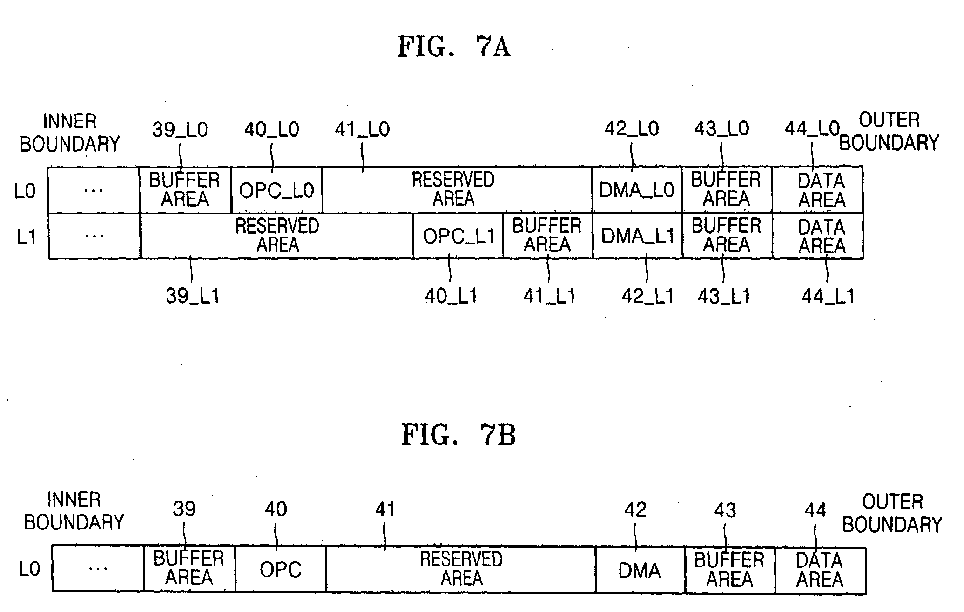

FIG. 7A illustrates another embodiment of the dual-layered information storage medium of FIG. 3A. Referring to FIG. 7A, the first and second information storage layers L0 and L1 include first and second OPC areas 40_L0 and 40_L1, respectively, DMAs 42_L0 and 42_L1, respectively, and data areas 44_L0 and 44_L1, respectively. A buffer area 39_L0 and a first reserved area 41_L0 are disposed at both sides of the first OPC area 40_L0, and a buffer area 41_L1 and a second reserved area 39_L1 are disposed at both sides of the second OPC area 40_L1. The information storage medium of FIG. 7A is the same as that of FIG. 3A in that the first and second OPC areas 40_L0 and 40_L1 are disposed within different radiuses. In contrast with FIG. 3A, the first and second reserved areas 41_L0 and 39_L1 of FIG. 7A have different sizes than the reserved areas 30_L and 30_L1 of Fig. 3A. In FIG. 3A, the buffer area 21_L0, the reserved area 30_L0, and the buffer area 31_L0 are sequentially disposed on a side of the first OPC area 20_L0 that faces the outer boundary. Similarly, in FIG. 7A, the first reserved area 41_L0, which has a length corresponding to the reserved area 30_L0 and the buffer areas 21_L0 and 31_L0, is disposed on a side of the first OPC area 40_L0 that faces the outer boundary.

Also, in FIG. 3A, the buffer area 31_L1, the reserved area 30_L1, and the buffer area 21_L1 are sequentially disposed on a side of the second OPC area 20_L1 that faces the inner boundary. Similarly, in FIG. 7A, the second reserved area 39_L1, which has a length corresponding to the reserved area 30_L1 and the buffer areas 21_L1 and 31_L1, is disposed on a side of the second OPC area 40_L1 that faces the inner boundary.

As described above, the information storage media according to the various embodiments are manufactured so that OPC areas in adjacent information storage layers are located within different radiuses and that each of the OPC areas face a reserved area or a buffer area, thereby preventing a recording property from being degraded due to OPC. Preferably, the reserved area or the buffer area that faces each of the OPC areas is longer than each of the OPC areas.

FIG. 7B illustrates another embodiment of the single-layered information storage medium of FIG. 3B. To have a consistency with the dual-layered information storage medium of FIG. 7A, the single-layered information storage medium of FIG. 7B includes an OPC area 40, a buffer area 39 disposed at one side of the OPC area 40, and a reserved area 41 disposed at the other side of the OPC area 40.. A DMA 42, a buffer area 43, and a data arca 44 are disposed adjacent to the reserved area 41. In this embodiment, the reserved area 41 is larger than the buffer area 39.

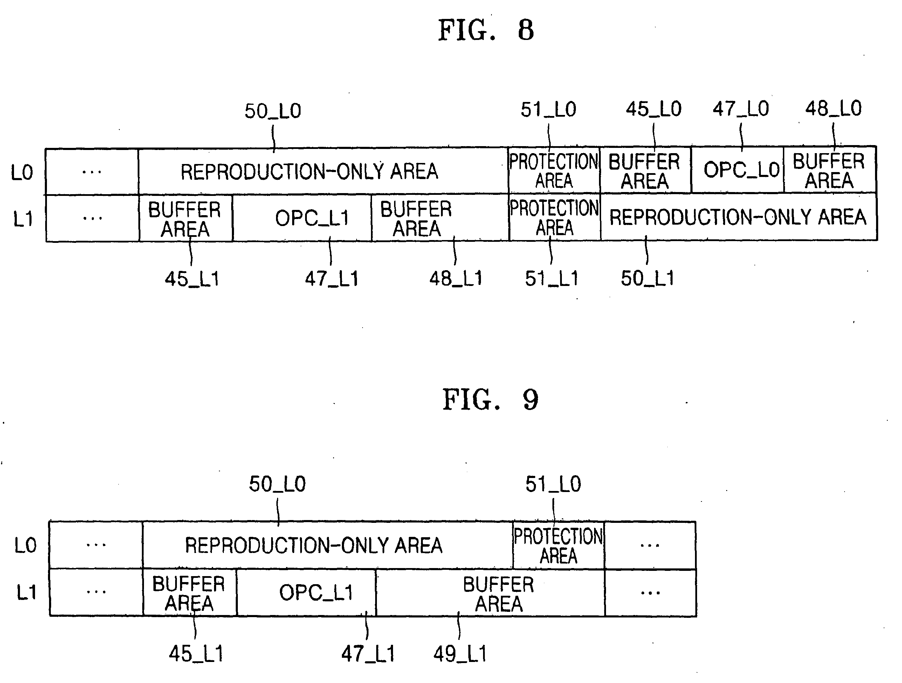

FIG. 8 illustrates a layout of a data area of a dual-layered information storage medium according to another embodiment of the present invention. The dual-layered information storage medium of FIG. 8 includes first and second information storage layers L0 and L1. A second OPC area 47_L1 for controlling optimal recording power is included in the second information storage layer L1, and a first reproduction-only area 50_L0 for storing reproduction-only data is disposed at a location of the first information storage layer L0 that faces the second OPC area 47_L1 The first reproduction-only area 50_L0 is larger than the second OPC area 47_L1. Examples of the reproduction-only data include a disc-related information and disk control data.

The first information storage layer L0 further includes a first protection area 51_L0 and a first OPC area 47_L0, between buffer areas 45_L0 and 48_L0. The second information storage layer L1 further includes buffer areas 45_L1 and 48 _L1, a second protection area 51_L1, and a second reproduction-only area 50_L1 . The buffer areas 45_L1 and 48_L1 are disposed at both sides of the second OPC area 47_L1

The first and second protection areas 51_L0 and 51_L1 are used to obtain the time during which a disk drive accesses each area of a disk. In other words, a protection area is allocated to transit an area to another area in the radial direction of a disk.

Each of the first and second buffer areas 45_L0, 45_L1, 48_L0, and 48_L1 has a length sufficient to cover a tolerance necessary for manufacturing an information storage medium. The tolerance is obtained in consideration of at least one of three factors: an error in the determination of the start position of each area: the size of a beam for recording and reproduction, and eccentricity. The error in the determination of the start position of each area is generated during mastering and has a size of about 100 µ m. In an information storage medium having no buffer areas between areas, when data is recorded on or reproduced from a track, an adjacent track is affected by a beam spot because the radius of the beam spot is typically greater than a track pitch. Thus, a buffer area is placed between areas in embodiments of the present invention. The size of the buffer area may be determined in consideration of the size of a recording and reproducing beam so as to prevent an influence of the recording and reproducing beam.

To prevent an influence of the OPC from an adjacent information storage layer, the first OPC area 47_L0 in the first information storage layer L0 is located to face the second reproduction-only area 50_L1, and the second OPC area 47_L1 in the second information storage layer L1 is located to face the first reproduction-only area 50_L0.

Disk-related information and disk control data, which are examples of reproduction-only data, may be recorded many times in the first and second reproduction-only areas 50_L0 and 50_L1 in order to increase the reliability of information. In this case, to face an area to at least one pair of disk-related information and disk control data, each of the buffer areas 45_L0 and 45_L1 is longer than a pair of disk-related information and disk control data for one recording.

Because the recording of a reproduction-only area is rarely affected by the OPC process, the area is located directly over or below an OPC area in the information storage medium of FIG. 8. Thus, while the reproduction-only area is used to prevent an influence of OPC in an OPC area upon another OPC area, the reproduction only area is also used as a data area. Also, because the first and second OPC areas 47_L0 and 47_L1 as arranged never face each other even when eccentricity occurs in the information storage medium of FIG. 8, performing an OPC process in an OPC area does not affect another OPC area which is on a different layer.

FIG. 9 illustrates a variation of the dual-layered information storage medium of FIG. 8. in the dual-lavered information storage medium of FIG. 9, a first information storage layer L0 includes the first reproduction-only area 50_L0 of FIG. 8, in which disk-related information for reproduction-only and disk control data for reproduction-only are recorded, and a first protection area 51_L0. A second information storage layer L1 includes an OPC area 47_L1 that faces the first reproduction-only area 50_L0. First and second buffer area 45_L1 and 49_L1 are disposed at both sides of the OPC area 47_L1. The information storage medium of FIG. 9 is different from that of FIG. 8 in that the second buffer area 49_L1 is sized to approximate the size of the second buffer 48_L1 of FIG. 8 and the second protection area 51_L1 of FIG. 8. As described above, the buffer area may have various sizes depending on its purpose, use, or the like.

Even if the information storage media of FIGS. 8 and 9 are made eccentric, or an error is generated in a location of each of the information storage media of FIGS. 8 and 9 where each area starts, the OPC area 47_L1 always faces the first reproduction-only area 50_L0. Hence, the reproduction-only area 50_L0 prevents the OPC in an OPC area of a layer from affecting an area of an adjacent layer and is used as a data area.

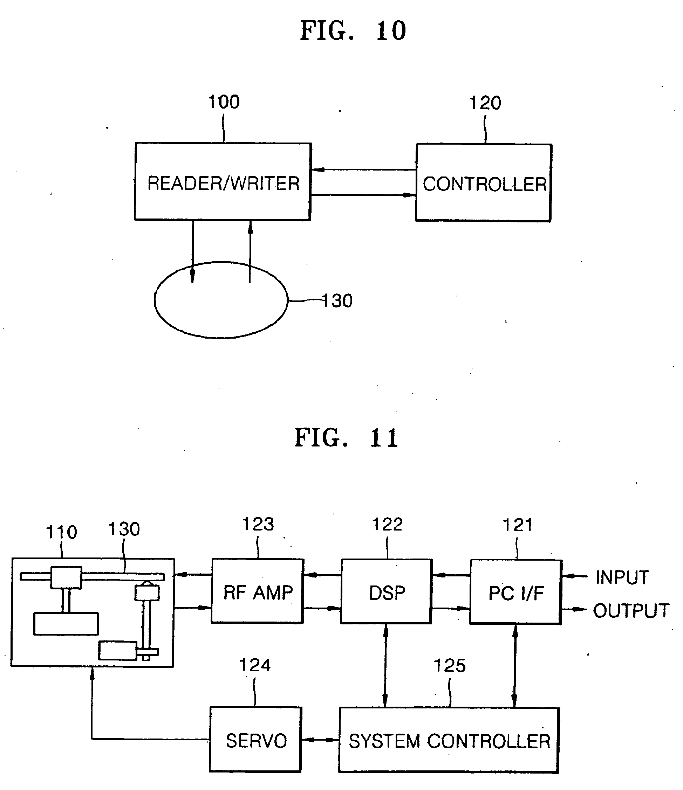

FIG. 10 is a block diagram of a disk drive in which the apparatus of FIG. 7 is implemented. Referring to FIG. 8, the disk drive includes a pickup 10 to serve as the writer/reader 1. The disk 30 is loaded in the pickup 10. The disk drive further includes a PC I/F 21, a DSP 22, an RF AMP 23, a servo 24, and a system controller 25, all of which constitute the controller 2.

Upon recording, the PC I/F 21 receives a recording command together with data to be recorded, from a host (not shown). The system controller 25 performs initialization necessary for recording, specifically, the system controller 25 reads out information for initialization, such as, disk-related information in a lead-in area of a disk, and prepares for recording based on the read-out information. The DSP 22 performs ECC encoding on the to-be-recorded data received from the PC I/F 21 by adding data such as parity to the received data, and then modulates the ECC-encoded data in a specified manner. The RF AMP 23 converts the data received from the DSP 22 into an RF signal. The pickup 10 records the RF signal received from the RF AMP 23 to the disk 30. The servo 24 receives a command necessary for servo control from the system controller 25 and servo-controls the pickup 10. If the disk 30 stores no reproducing speed information, the system controller 25 commands the pickup 10 to write the reproducing speed information to a specified area of the disk 30 when recording starts, while recording is being executed, or after recording has been completed.

Upon reproduction, the PC I/F 21 receives a reproduction command from the host (not shown). The system controller 25 performs initialization necessary for reproduction. When the initialization is completed, the system controller 25 reads out reproducing speed information recorded on the disk 30 and performs reproduction at a reproducing speed corresponding to the read-out reproducing speed information. The pickup 10 projects a laser beam onto the disk 30, receives a laser beam reflected by the disk 30, and outputs an optical signal. The RF AMP 23 converts the optical signal received from the pickup 10 into an RF signal, supplies modulated data obtained from the RF signal to the DSP 22, and supplies a servo control signal obtained from the RF signal to the servo 24. The DSP 22 demodulates the modulated data and outputs data obtained through ECC error correction. The servo 24 receives the servo control signal from the RF AMP 23 and a command necessary for servo control from the system controller 25 and servo-controls the pickup 10. The PC I/F 21 sends data received from the DSP 22 to the host (not shown).

A method of recording data to an information storage medium according to the present invention comprising recording data in the optimal power control area for obtaining an optical recording condition; and disposing the optimal power control areas in adjacent ones of the information storage layers within different radiuses of the information storage medium.

## Claims

1. An information storage medium, comprising:
a first information storage layer (L0) comprising a first optimal power control area (47_L0); and
a second information storage layer (L1) adjacent to the first information storage layer (L0) comprising a second optimal power control area (47_L1);
wherein the first and second optimal power control areas (47_L0, 47_L1) do not overlap;
**characterised in that**:
first buffer areas (45_L0,45_L1) are disposed on at least one side of the first optimal power control area (47_L0) and the second optimal power control area (47_L1) respectively,
a reproduction-only area (50_L0) storing reproduction-only data is disposed in the first information storage layer (L0) such that the reproduction-only area (50_L0) faces the second optimal power control area (47_L1) of the second information storage layer (L1); and
the reproduction-only area 50_L0) is larger than the sum of the second optimal control area (47_L1) and the first buffer area (45_L1) disposed on one side of the second optimal power control area (47_L1).

2. A reproducing apparatus, comprising:
a reader (100) which reproduces data from an information storage medium, the information storage medium including a plurality of information storage layers; and
a controller (120) which controls the reader to reproduce the data from the information storage medium,
**characterised in that**:
the reader is configured to reproduce data from an information storage medium in which:
each of the information storage layers (L0_L1) includes an optimal power control area (47_L0, 47_L1) for use in obtaining an optical recording condition, and at least a buffer area (45_L0, 45_L1) disposed at least one side of the optimal power control area (47_L0, 47_L1), and
the optimal power control areas (47_L0, 47_L1) in adjacent ones of the information storage layers (L0,L1) are disposed within different radii of the information storage medium,
a reproduction-only area (50_L0) storing reproduction-only data is disposed in one of the information storage layers (L0,L1) such that the reproduction-only area (50_L0) faces the optimal power control area (47_L1) of the information storage layer (L1) adjacent to the one of the information storage layers (L0,L1); and
the reproduction-only area (50_L0) is larger than the sum of the optimal power control area (47_L1) of the information storage laser (L1) adjacent to the one of the information storage layers (L0,L1) and the buffer area (45_L1) disposed on one side of the optimal power control area (20_L1).

3. An apparatus for recording on an information storage medium comprising a first information storage layer (L0) having a first optimal power control area (47_L0) and a second information storage layer (L1) adjacent to the first information storage layer (L0) having a second optimal power control area (47_L1), the apparatus comprising:
an optical pickup arranged to record first data on the first optimal power control area (47_L1) to read a first optical power and records second data on the second optimal power control area (47_L1) to read a second optimal power, and
a controller (120) arranged to control the optical pickup to record data on the information storage medium,
**characterised in that**:
the apparatus is configured to record data on an information storage medium in which:
the first and second optimal power control areas (47_L0,47_L1) do not overlap each other and buffer areas (45_L0,45_L1) are disposed on at least one side of the first optimal power control area (47_L0) and the second optimal power control area (47_L1), respectively,
a reproduction-only area (50_L0) storage reproduction-only data is disposed in the first information storage layers (L0) such that the reproduction-only area (50_L0) faces the second optimal power control area (47_L1) of the second information storage layers (L1); and
the reproduction-only area (50_L0) is larger than the sum of the second optimal control area (47_L1) and the buffer area (45_L1) disposed on one side of the second optimal power control area (20_L1).

## Patentansprüche

1. Informationsspeichermedium, umfassend:
eine erste Informationsspeicherschicht (L0), umfassend einen ersten Bereich für optimale Leistungsregelung (47_L0); und
eine zweite Informationsspeicherschicht (L1) angrenzend an der ersten Informationsspeicherschicht (L0), umfassend einen zweiten Bereich für optimale Leistungsregelung(47_L1);
wobei sich der erste und zweite Bereich für optimale Leistungsregelung (47_L0, 47_L1) nicht überlappen;
**dadurch gekennzeichnet, dass**
erste Pufferbereiche (45_L0, 45_L1) an mindestens einer Seite des ersten Bereichs für optimale Leistungsregelung (47_L0) bzw. des zweiten Bereichs für optimale Leistungsregelung (47_L1) angeordnet sind,
ein Nur-Reproduktion-Bereich (50_L0), der Nur-Reproduktion-Daten speichert, derart in der ersten Informationsspeicherschicht (L0) angeordnet ist, dass der Nur-Reproduktion-Bereich (50_L0) zu dem zweiten Bereich für optimale Leistungsregelung(47_L1) der zweiten Informationsspeicherschicht (L1) weist; und
der Nur-Reproduktion-Bereich (50_L0) größer ist als die Summe des zweiten Bereichs für optimale Regelung (47_L1) und des ersten Pufferbereichs (45_L1), der an einer Seite des zweiten Bereichs für optimale Leistungsregelung (47_L1) angeordnet ist.

2. Reproduktionsvorrichtung, umfassend:
ein Lesegerät (100), das Daten von einem Informationsspeichermedium reproduziert, wobei das Informationsspeichermedium eine Vielzahl von Informationsspeicherschichten enthält; und
eine Steuerung (120), die das Lesegerät zur Reproduktion der Daten von dem Informationsspeichermedium steuert,
**dadurch gekennzeichnet, dass**:
das Lesegerät konfiguriert ist zum Reproduzieren von Daten von einem Informationsspeichermedium, in dem:
jede der Informationsspeicherschichten (L0, L1) einen Bereich für optimale Leistungsregelung (47_L0, 47_L1) zur Verwendung beim Erhalten einer optischen Aufzeichnungsbedingung und mindestens einen Pufferbereich (45 L0, 45 L1), angeordnet an mindestens einer Seite des Bereichs für optimale Leistungsregelung (47_L0, 47_L1), enthält, und
die Bereiche für optimale Leistungsregelung (47_L0, 47_L1) in angrenzenden einen der Informationsspeicherschichten (L0, L1) innerhalb von verschiedenen Radien des Informationsspeichermediums angeordnet sind,
ein Nur-Reproduktion-Bereich (50_L0), der Nur-Reproduktion-Daten speichert, derart in einer der Informationsspeicherschichten (L0, L1) angeordnet ist, dass der Nur-Reproduktion-Bereich (50_L0) zu dem Bereich für optimale Leistungsregelung(47_L1) der an der einen der Informationsspeicherschichten (L0, L1) angrenzenden Informationsspeicherschicht (L1) weist; und
der Nur-Reproduktion-Bereich (50_L0) größer ist als die Summe des Bereichs für optimale Regelung (47_L1) der an der einen der Informationsspeicherschichten (L0, L1) angrenzenden Informationsspeicherschicht (L1) und des Pufferbereichs (45 L1), der an einer Seite des Bereichs für optimale Leistungsregelung (47_L1) angeordnet ist.

3. Vorrichtung zum Aufzeichnen auf einem Informationsspeichermedium, umfassend eine erste Informationsspeicherschicht (L0) mit einem ersten Bereich für optimale Leistungsregelung (47_L0) und eine zweite Informationsspeicherschicht (L1) angrenzend an der ersten Informationsspeicherschicht (L0) mit einem zweiten Bereich für optimale Leistungsregelung (47_L1), wobei die Vorrichtung Folgendes umfasst:
einen optischen Aufnehmer, angeordnet zum Aufzeichnen erster Daten in dem ersten Bereich für optimale Leistungsregelung (47_L0), um eine erste optimale Leistung zu lesen, und Aufzeichnen von zweiten Daten in dem zweiten Bereich für optimale Leistungsregelung (47_L1), um eine zweite optimale Leistung zu lesen, und
eine Steuerung (120), angeordnet zum Steuern des optischen Aufnehmers zum Aufzeichnen von Daten auf dem Informationsspeichermedium,
**dadurch gekennzeichnet, dass**
die Vorrichtung dahingehend konfiguriert ist, Daten auf einem Informationsspeichermedium aufzuzeichnen, in dem:
der erste und zweite Bereich für optimale Leistungsregelung (47_L0, 47_L1) einander nicht überlappen und die Pufferbereiche (45_L0, 45_L1) an mindestens einer Seite des ersten Bereichs für optimale Leistungsregelung (47_L0) bzw. des zweiten Bereichs für optimale Leistungsregelung (47_L1) angeordnet sind,
ein Nur-Reproduktion-Bereich (50_L0), der Nur-Reproduktion-Daten speichert, derart in der ersten Informationsspeicherschicht (L0) angeordnet ist, dass der Nur-Reproduktion-Bereich (50_L0) zu dem zweiten Bereich für optimale Leistungsregelung(47_L1) der zweiten Informationsspeicherschicht (L1 weist; und
der Nur-Reproduktion-Bereich (50_L0) größer ist als die Summe des zweiten Bereichs für optimale Regelung (47_L1) und des Pufferbereichs (45_L1), der an einer Seite des zweiten Bereichs für optimale Leistungsregelung (47_L1) angeordnet ist.

## Revendications

1. Support de stockage d'informations, comprenant :
une première couche de stockage d'informations (L0) comprenant une première zone de régulation de puissance optimale (47_L0) ; et
une deuxième couche de stockage d'informations (L1), adjacente à la première couche de stockage d'informations (L0), comprenant une deuxième couche de régulation de puissance optimale (47_L1) ;
lesquelles première et deuxième zones de régulation de puissance optimale (47_L0, 47_L1) ne se chevauchent pas ;
**caractérisé en ce que** :
des premières zones tampons (45_L0, 45_L1) sont agencées sur au moins un côté respectivement de la première zone de régulation de puissance optimale (47_L0) et de la deuxième zone de régulation de puissance optimale (47_L1),
une zone de reproduction seule (50_L0) stockant des données de reproduction seule est agencée dans la première couche de stockage d'informations (L0) de manière à être en regard de la deuxième zone de régulation de puissance optimale (47_L1) de la deuxième couche de stockage d'informations (L1) ; et
la zone de reproduction seule (50_L0) est plus grande que la somme de la deuxième zone de régulation de puissance optimale (47_L1) et de la première zone tampon (45_L1) agencée sur un côté de la deuxième zone de régulation de puissance optimale (47_L1).

2. Appareil de reproduction, comprenant :
un lecteur (100) qui reproduit des données à partir d'un support de stockage d'informations, le support de stockage d'informations comportant une pluralité de couches de stockage d'informations ; et
une unité de commande (120) qui commande le lecteur pour lui faire reproduire les données à partir du support de stockage d'informations,
**caractérisé en ce que** :
le lecteur est conçu pour reproduire des données à partir d'un support de stockage d'informations dans lequel :
chacune des couches de stockage d'informations (L0, L1) comporte une zone de régulation de puissance optimale (47_L0, 47_L1) permettant d'obtenir une condition d'enregistrement optique, et au moins une zone tampon (45_L0, 45_L1) agencée sur au moins un côté de la zone de régulation de puissance optimale (47_L0, 47_L1), et
les zones de régulation de puissance optimale (47_L0, 47_L1) dans des couches adjacentes parmi les couches de stockage d'informations (L0, L1) sont agencées au sein de rayons différents du support de stockage d'informations,
une zone de reproduction seule (50_L0) stockant des données de reproduction seule est agencée dans une des couches de stockage d'informations (L0, L1) de manière à être en regard de la zone de régulation de puissance optimale (47_L1) de la couche de stockage d'informations (L1) adjacente à ladite une des couches de stockage d'informations (L0, L1) ; et
la zone de reproduction seule (50_L0) est plus grande que la somme de la zone de régulation de puissance optimale (47_L1) de la couche de stockage d'informations (L1) adjacente à ladite une des couches de stockage d'informations (L0, L1) et de la zone tampon (45_L1) agencée sur un côté de la zone de régulation de puissance optimale (47_L1).

3. Appareil d'enregistrement sur un support de stockage d'informations comprenant une première couche de stockage d'informations (L0) présentant une première zone de régulation de puissance optimale (47_L0) et une deuxième couche de stockage d'informations (L1), adjacente à la première couche de stockage d'informations (L0), présentant une deuxième zone de régulation de puissance optimale (47_L1), l'appareil comprenant :
une tête de lecture optique servant à enregistrer des premières données sur la première zone de régulation de puissance optimale (47_L0) pour lire une première puissance optimale et à enregistrer des deuxièmes données sur la deuxième zone de régulation de puissance optimale (47_L1) pour lire une deuxième puissance optimale, et
une unité de commande (120) servant à commander la tête de lecture optique pour lui faire enregistrer des données sur le support de stockage d'informations,
**caractérisé en ce que** :
l'appareil est conçu pour enregistrer des données sur un support de stockage d'informations dans lequel :
les première et deuxième zones de régulation de puissance optimale (47_L0, 47_L1) ne se chevauchent pas, et des zones tampons (45_L0, 45_L1) sont agencées sur au moins un côté respectivement de la première zone de régulation de puissance optimale (47_L0) et de la deuxième zone de régulation de puissance optimale (47_L1),
une zone de reproduction seule (50_L0) stockant des données de reproduction seule est agencée dans la première couche de stockage d'informations (L0) de manière à être en regard de la deuxième zone de régulation de puissance optimale (47_L1) de la deuxième couche de stockage d'informations (L1) ; et
la zone de reproduction seule (50_L0) est plus grande que la somme de la deuxième zone de régulation de puissance optimale (47_L1) et de la zone tampon (45_L1) agencée sur un côté de la deuxième zone de régulation de puissance optimale (47_L1).
